# EUROPEAN PATENT APPLICATION

(11) **EP 1 157 926 A2**
(43) Date of publication of application: **28.11.2001**
(21) Application number: 01500128.2
(22) Date of filing: 21.05.2001
(51) Int. Cl.: B64F 1/31, B62D 21/00

(54) **A method for manufacturing a chassis for an airport passenger transport vehicle**

(30) Priority: 25.05.2000 ES 200001319
(71) Applicant: Noge, S.L., 17401 Arbucies (ES)
(72) Inventor: Genabat Pla, Jaime, 17401 Arbucies (ES)
(74) Representative: Ponti Sales, Adelaida

(57) **Abstract**

This consists essentially in: a) Cutting the two longitudinal rails (5) of the self-supporting unit (3); b) fitting a pair of U-section beams (10) inside each of said cut sections; c) fitting a plate (9) at each joint zone; d) fitting a transversally running tubular profile inside each of said side rails (6); e) welding said tubular profiles to the side rails; f) welding a tubular profile (7) to each one of the ends of the aforesaid transverse tubular profiles, and g) welding a plurality of tubular profiles between the joints of the structure. A chassis for passenger transport vehicles in airports is thus achieved in a less complex and costly manner.

## Description

This invention relates to a method for manufacturing a chassis for passenger transport vehicles in airports by transforming a conventional chassis.

### BACKGROUND OF THE INVENTION

Known in the art are special vehicles for passenger transport in airport facilities that comprise a chassis made up of an engine unit, a steering unit and a self-supporting unit that are independent of each other, formed of a structure of longitudinal and transverse steel and aluminium rails. The engine in this special vehicle is located in the front part of same.

The main disadvantage of this type of chassis is that it has a complex structure that means manufacturing costs are high.

Also known are chassis for conventional passenger transport by road, better known as coaches, which comprise three sections which consist in a steering unit, a self-supporting unit and an engine unit, formed of a structure of metal rails which includes at least one pair of central longitudinal rails and a plurality of side rails.

This type of chassis further includes a set of batteries, a set of electrically-operated valves and a fuel tank mounted onto the aforesaid structure.

The purpose of this invention is to transform a conventional chassis of this type in order to adapt it to special vehicles for passenger transport in airports. The transformation is necessary due to the original dimensions of these chassis being specially designed for use thereof on roads, and they cannot be used in airports since they do not comply with a number of requirements called for under current legislation for passenger transport vehicles in airports.

This type of vehicles is required to have exterior dimensions, standing passenger capacity and safety standards that are not met by the conventional chassis of vehicles for passenger transport by road, thus making the aforesaid transformation necessary.

### DESCRIPTION OF THE INVENTION

The method for manufacturing a chassis for passenger transport vehicles in airports by transforming a conventional chassis such as that described above, is characterised in that it consists in:
a) Cutting the two longitudinal rails in the zone of the self-supporting unit;
b) separating the two cut sections of each longitudinal rail;
c) fitting a pair of U-shaped rails into each of said cut sections;
d) welding said U-rails to the two central longitudinal rails;
e) fitting and welding a plate onto each joint zone;
f) cutting the end of the side rails;
g) fitting a transversally running tubular profile inside each of said side rails;
h) welding said tubular profiles to the side rails;
i) welding a tubular profile mounted in a longitudinal direction to each one of the ends of the aforesaid transverse tubular profiles, and
j) welding a plurality of tubular reinforcement profiles between the points of union of the structure.

Thanks to this procedure it is possible to adapt the chassis of a passenger road transport vehicle to make it into a chassis for passenger transport in airports. Moreover, this manufacturing method is less complex than the procedure specially employed for manufacturing chassis for passenger transport vehicles in airports. Furthermore, due to the fact that a conventional chassis is taken as the starting point and that said transformation method is relatively simple, manufacturing costs are reduced.

According to another aspect of the invention, the procedure is characterised in that, once the metal structure of the chassis has been made, the following operations are carried out:
k) separating the fuel tank, the set of electrically-operated valves and the set of batteries from the structure on which they are mounted;
l) fitting a new fuel tank which has a smaller base and is higher onto the self-supporting unit;
m) mounting the set of electrically-operated valves onto the self-supporting unit, and
n) mounting the set of batteries onto the engine unit.

Thanks to this method, by distributing the set of electrically-operated valves suitably on the self-supporting unit and the set of batteries on the rear part of the engine unit, and by fitting a new fuel tank which has a smaller base and is higher on the side of the self-supporting unit, a plan layout is achieved which provides a maximum flat and obstacle-free space suitable for accommodating standing passengers.

It should be noted that the set of electrically-operated valves for occupying less space is placed in a position rotated through 90° with respect to the layout on the conventional chassis.

The zones in which all these elements are housed, together with the wheel axles, give rise to elevations from the plan of the vehicle which are used for mounting seats. Use is therefore made of a large part of the floor of the vehicle for accommodating the passengers.

According to another aspect of the invention, the procedure is characterised in that the following operation is carried out:
o) mounting the engine on the engine unit itself in rear, vertical transverse position, and
p) mounting the vehicle transmission laterally.

Thanks to these characteristics, the engine unit is not altered substantially for locating the engine inside the vehicle, and installation of the vehicle transmission on the side part permits a flat vehicle plan to be obtained.

Preferably, the welding is carried out by plug welding.

### BRIEF DESCRIPTION OF THE DRAWINGS

In order to facilitate the description of all that has been outlined above, some drawings are attached which show, schematically and solely by way of non-restrictive example, a practical case of embodiment of the chassis of the invention.

In these drawings: Figure 1 is a plan view of the chassis of the invention; Figure 2 is an elevation view of the chassis; Figure 3 is a perspective detail view of the metal structure of the self-supporting unit; and Figure 4 is a plan view of the interior of the vehicle.

### DESCRIPTION OF A PREFERRED EMBODIMENT

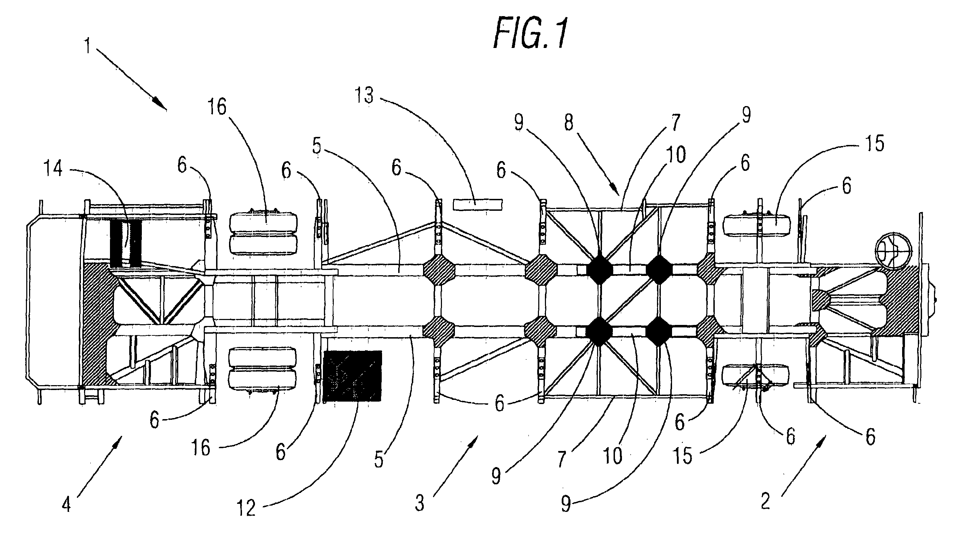

Figure 1 shows a chassis of the invention for passenger transport vehicles in airports made from the chassis of conventional passenger transport vehicles for road use, commonly known as coaches, which comprises three sections which consist in a steering unit 2, a self-supporting unit 3 and an engine unit 4, formed by a structure of longitudinal central metal rails 5, a plurality of transverse side rails and tubular profiles 6 and a plurality of side, longitudinal tubular profiles 7. The vehicle engine is situated in the engine unit 4 in vertical, rear, transverse position.

The front part of the self-supporting unit 3 has a latticed structure 8 which includes some side, longitudinal, tubular profiles 7 attached to some transverse, side, tubular profiles 6 which are in turn attached to the two central longitudinal rails 5 of the self-supporting unit 3.

The central part of said latticed structure 8 can be seen to have four hexagonal plates 9 with a thickness of 5 mm situated at the zones in which the rails are joined to each other, in order to reinforce that zone.

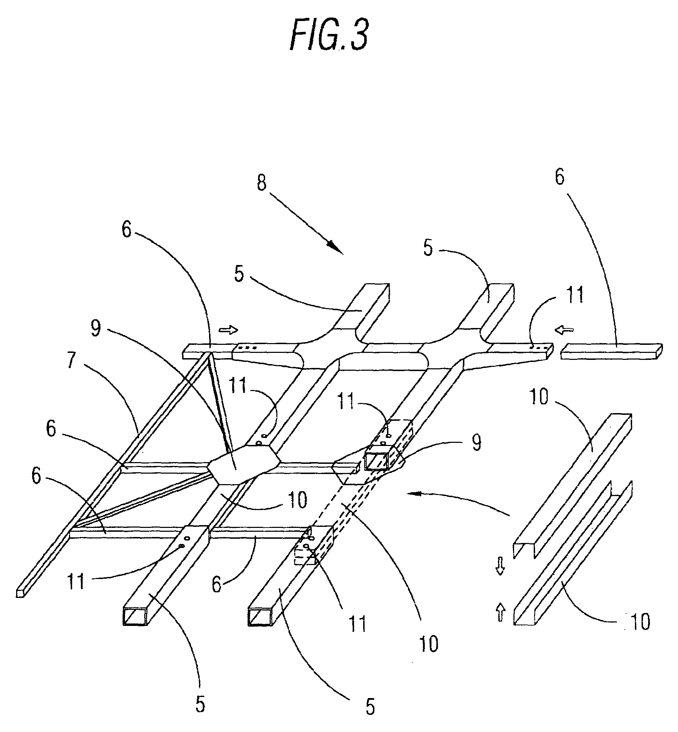

Figure 3 shows in greater detail the modification made to the front part of the self-supporting unit 3, together with the profiles of some of the parts which form it, in order to make said modification easier to understand. This figure shows the layout and the type of joint between complementary metal rails 10, which have U-shaped section, and the central, longitudinal rails 5, cut previously using plasma techniques.

For transformation of the conventional chassis, the complementary rails 10 are firstly inserted partially inside the central longitudinal rails 5 and then welded. These complementary rails 10 measuring 150x55x5 have been fitted in order to make the chassis 1 of the invention longer and thus obtain greater interior space for transporting the passengers.

As can be observed, the central longitudinal rails 5 and the complementary rails 10 are joined together by plug welding 11 and adding reinforcement plates 9 at the top part of the joint.

In addition to these complementary rails 10, the latticed structure 8 includes some transverse tubular profiles 6 measuring 40x40x3 which bear some longitudinal tubular profiles 7 on their ends. These profiles are fitted in order to make the chassis 1 of the invention wider.

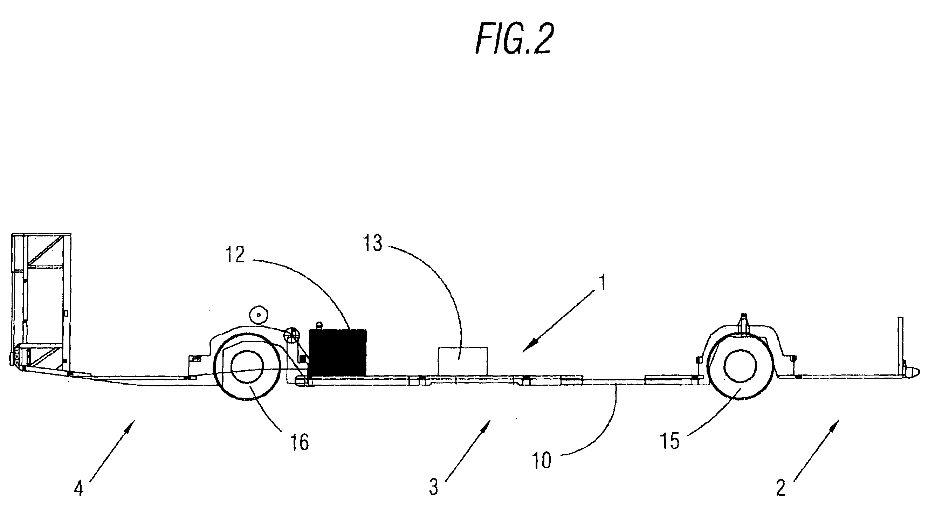

In addition to the modified metal structure, as shown in Figures 1 and 2, the chassis 1 of the vehicle includes a modified fuel tank 12 situated on the side rear part of the self-supporting unit 3, a set of electrically-operated pneumatic valves 13 which form part of the vehicle braking system and are located at the side central part of the self-supporting unit 3, a set of batteries 14 situated in the rear side part of engine unit 4, the front 15 and rear 16 wheels of the vehicle itself and the steering system.

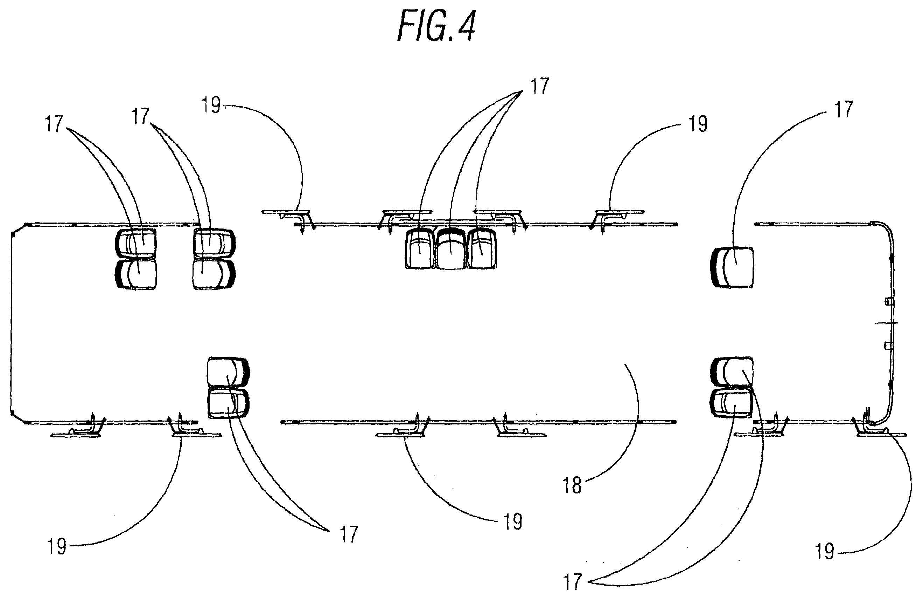

Figure 4 shows the arrangement of the seats 17 inside the vehicle, and that there is a large flat surface 18 free of obstacles. This arrangement of seats 17 inside the vehicle itself has been carried out taking into account the distribution of the various elements that make up the chassis 1 of the vehicle. For this reason, the interior seats 17 are situated over the front and rear axles of the wheels 15 and 16, over the set of batteries 14, over the set of electrically-operated pneumatic valves 13 and over the fuel tank 12.

In order to comply with the requirements of the regulations on passenger transport vehicles in airports, the vehicle has to have five side doors 19 for the passengers to board and alight. There are three doors on one side and another two on the other side.

In Figure 4, in order to facilitate understanding of the arrangement of the seats 17, no other interior elements of the vehicle have been shown.

Independent of the object of this invention are the materials used in manufacturing of the elements which constitute the chassis described, together with the shapes and dimensions of same and all accessory details that might be presented, which may be replaced by others that are technically equivalent, as long as they do not affect the essential nature nor depart from the sphere of protection defined by the claims attached hereinafter.

## Claims

1. Method for manufacturing a chassis (1) for passenger transport vehicles in airports by transforming a conventional chassis, which chassis comprises three sections which consist in a steering unit (2), a self-supporting unit (3) and an engine unit (4), formed of a structure of metal rails which includes at least one pair of central longitudinal rails (5) and a plurality of side rails (6) and which further includes a set of batteries (14), a set of electrically-operated valves (13) and a fuel tank (12) mounted onto the aforesaid structure, **characterised in that** it consists in:
a) Cutting the two longitudinal rails (5) in the zone of the self-supporting unit (3);
b) separating the two cut sections of each longitudinal rail (5);
c) fitting a pair of U-shaped rails (10) into each of said cut sections;
d) welding said U-rails (10) to the two central longitudinal rails (5);
e) fitting and welding a plate (9) onto each joint zone;
f) cutting the end of the side rails (6);
g) fitting a transversally running tubular profile inside each of said side rails (6);
h) welding said tubular profiles to the side rails;
i) welding a tubular profile (7) mounted in a longitudinal direction to each one of the ends of the aforesaid transverse tubular profiles, and
j) welding a plurality of tubular reinforcement profiles between the points of union of the structure.

2. Method as claimed in Claim 1, **characterised in that** once the metal structure of the chassis (1) has been made, the following operations are carried out:
k) separating the fuel tank, the set of electrically-operated valves (13) and the set of batteries (14) from the structure on which they are mounted;
l) fitting a new fuel tank (12) which has a smaller base and is higher onto the self-supporting unit (3);
m) mounting the set of electrically-operated valves (13) onto the self-supporting unit (3), and
n) mounting the set of batteries (14) onto the engine unit (4).

3. Method as claimed in Claim 1, **characterised in that** the following operations are carried out:
o) mounting the engine on the engine unit (4) itself in rear, vertical transverse position, and
p) mounting the vehicle transmission laterally.

4. Method as claimed in Claim 1, **characterised in that** the welding is carried out by plug welding (11).

5. Chassis (1) made according to the method set out in the preceding claims.
